# EUROPÄISCHE PATENTSCHRIFT

(11) **EP 3 523 954 B1**
(45) Veröffentlichungstag und Bekanntmachung des Hinweises auf die Patenterteilung: **07.10.2020**
(21) Anmeldenummer: 17757700.4
(22) Anmeldetag: 08.08.2017
(51) Int. Cl.: H04N 5/232, H04N 5/33, G06T 5/00, G06T 5/50

(54) **VERFAHREN ZU EINER RAUSCHOPTIMIERUNG EINER KAMERA, INSBESONDERE EINER HANDGEHALTENEN WÄRMEBILDKAMERA**
METHOD FOR THE NOISE OPTIMIZATION OF A CAMERA, IN PARTICULAR A HANDHELD THERMAL IMAGING CAMERA
PROCÉDÉ D'OPTIMISATION D'UNE CAMÉRA EN TERME DE BRUIT, EN PARTICULIER D'UNE CAMÉRA OPTIQUE TENUE À LA MAIN

(30) Priorität: 06.10.2016 DE 102016219391
(43) Veröffentlichungstag der Anmeldung: 14.08.2019
(73) Patentinhaber: Robert Bosch GmbH, 70442 Stuttgart (DE)
(72) Erfinder: FRANK, Michael, 75015 Bretten (DE); MARQUARDT, Daniel, 70197 Stuttgart (DE); RUMBERG, Axel, 76199 Karlsruhe (DE); UHLIG, Mike, 70178 Stuttgart (DE); MEYER, Patrick, 70771 Leinfelden-Echterdingen (DE); BABKINA, Tatiana, 70771 Leinfelden-Echterdingen (DE)
(86) Internationale Anmeldenummer: PCT/EP2017/070059
(87) Internationale Veröffentlichungsnummer: WO 2018/065143

(56) Entgegenhaltungen:
- EP-A1- 1 641 246
- EP-A2- 1 993 280
- EP-A2- 2 642 262
- JP-A- 2005 348 178
- US-A1- 2009 185 266
- US-A1- 2015 062 346

## Beschreibung

### Stand der Technik

Es sind bereits Verfahren zu einer Rauschoptimierung einer Kamera, insbesondere einer handgehaltenen Wärmebildkamera, bekannt, wobei bei den bekannten Verfahren mittels der Kamera in zumindest einem Verfahrensschritt Bilder erfasst werden, wobei in zumindest einem Verfahrensschritt zumindest eine Bewegungskenngröße mittels zumindest einer Sensoreinheit der Kamera erfasst wird und wobei in zumindest einem Verfahrensschritt mittels einer Recheneinheit der Kamera eine Mittelung von Bilddaten von erfassten Bildern durchgeführt wird. Beispiele derartiger Verfahren finden sich in US 2015/062346 A1, EP 1641246 A1, EP 1993280 A2, JP 2005/348178 A, EP 2642262 A2 oder US 2009/185266 A1.

### Offenbarung der Erfindung

Die Erfindung geht aus von einem Verfahren zu einer Rauschoptimierung einer Kamera nach Anspruch 1, wobei mittels der Kamera in zumindest einem Verfahrensschritt Bilder erfasst werden, wobei in zumindest einem Verfahrensschritt zumindest eine Bewegungskenngröße mittels zumindest einer Sensoreinheit der Kamera erfasst wird und wobei in zumindest einem Verfahrensschritt mittels einer Recheneinheit der Kamera eine Mittelung von Bilddaten von erfassten Bildern durchgeführt wird, wobei in zumindest einem Verfahrensschritt zumindest in Abhängigkeit von einer Intensität, insbesondere einer Änderungsrate, der erfassten Bewegungskenngröße mittels der Recheneinheit der Kamera zumindest eine Anzahl von zu mittelnden Bildern bestimmt wird. Hierdurch kann vorteilhaft eine von einer Bewegung der Kamera abhängige Rauschreduzierung erreicht werden. Es kann vorteilhaft eine verbesserte Bildqualität, insbesondere bei einer geringen Bewegung der Kamera, erreicht werden. Es kann vorteilhaft ein niedriger Rechenaufwand zu einer Rauschreduzierung erreicht werden.

Vorzugsweise weist die Kamera zumindest eine Bilderfassungseinheit auf, die dazu vorgesehen ist, zumindest ein Bild, insbesondere ein Wärmebild, einer Umgebung und/oder eines Objekts zu erfassen. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Besonders bevorzugt umfasst die zumindest eine Bilderfassungseinheit zumindest einen Infrarotbildsensor, insbesondere ein Focal Plane Array (FPA). Vorzugsweise ist die Bilderfassungseinheit zu einer Detektion zumindest einer elektromagnetischen Strahlung vorgesehen. Vorzugsweise ist die Bilderfassungseinheit zu einer Detektion von Licht, insbesondere von infrarotem Licht, bevorzugt von infrarotem Licht aus einem Wellenlängenbereich von 780 nm bis 50.000 nm vorgesehen. Vorzugsweise weist die Bilderfassungseinheit zumindest ein abbildendes Optikelement, insbesondere eine Linse, ein Objektiv, eine Fresnel-Linse oder ein weiteres, einem Fachmann als sinnvoll erscheinendes abbildendes Optikelement auf. Vorzugsweise ist das abbildende Optikelement dazu vorgesehen, auf das abbildende Optikelement einfallende elektromagnetische Strahlung, insbesondere infrarotes Licht, der Umgebung und/oder des Objekts auf den Infrarotbildsensor abzubilden. Bevorzugt wandelt der Infrarotbildsensor die auf ihn einfallende, insbesondere abgebildete, elektromagnetische Strahlung, insbesondere das infrarote Licht, in dem Bild der Umgebung und/oder des Objekts in entsprechende Bilddaten, insbesondere in elektronische Bilddaten um.

Unter einer "Sensoreinheit" soll in diesem Zusammenhang insbesondere eine Einheit verstanden werden, die dazu vorgesehen ist, zumindest eine Kenngröße und/oder eine physikalische Eigenschaft aufzunehmen, wobei die Aufnahme aktiv, wie insbesondere durch Erzeugen und Aussenden eines elektrischen Messsignals, und/oder passiv, wie insbesondere durch eine Erfassung von Eigenschaftsänderungen eines Sensorbauteils, stattfinden kann. Vorzugsweise weist die Sensoreinheit zumindest ein Sensorelement auf, das dazu vorgesehen ist, zumindest eine Bewegungskenngröße zu erfassen. Vorzugsweise nutzt die Sensoreinheit in zumindest einem Betriebszustand die Bilderfassungseinheit als ein zusätzliches Sensorelement zu einer Erfassung der Bewegungskenngröße. Bevorzugt ist die Bilderfassungseinheit zumindest teilweise einteilig mit der Sensoreinheit ausgeführt. Unter "zumindest teilweise einteilig" soll in diesem Zusammenhang insbesondere verstanden werden, dass zumindest ein Bauteil zumindest eines Objekts und/oder zumindest ein erstes Objekt einteilig mit zumindest einem Bauteil zumindest eines weiteren Objekts und/oder einteilig mit zumindest einem weiteren Objekt ausgebildet ist. Die, insbesondere erfasste, Bewegungskenngröße ist vorzugsweise als räumliche Position, als räumliche Lage, als Geschwindigkeit, als Beschleunigung, als Temperaturänderung, als Helligkeitsänderung oder als eine weitere, einem Fachmann als sinnvoll erscheinende Bewegungskenngröße ausgebildet. Bevorzugt charakterisiert die zumindest eine Bewegungskenngröße eine Bewegung, insbesondere eine Translation, eine Rotation, ein Wackeln und/oder eine Schwingung, der Kamera, insbesondere eine Bewegung relativ zu einer Umgebung und/oder zu einem Objekt, bevorzugt eine Bewegung zu der mittels der Bilderfassungseinheit zu erfassenden Umgebung und/oder dem mittels der Bilderfassungseinheit zu erfassenden Objekt. Bevorzugt ist die Bewegungskenngröße, insbesondere eine Intensität der Bewegungskenngröße, quantifizierbar ausgebildet. Besonders bevorzugt ist die Bewegungskenngröße, insbesondere die Intensität der Bewegungskenngröße, als ein numerischer, insbesondere digitaler Wert, quantifizierbar ausgebildet. Unter einer "Intensität einer Kenngröße" soll insbesondere ein quantitatives Ausmaß, ein Betrag, eine Größenordnung, eine Maßzahl oder eine weitere, einem Fachmann als sinnvoll erscheinende quantitative Eigenschaft der Kenngröße verstanden werden.

Vorzugsweise weist die Kamera zumindest eine Recheneinheit auf, die dazu vorgesehen ist, zumindest ein mittels der Bilderfassungseinheit, insbesondere mittels des Infrarotbildsensors, erfasstes Bild, insbesondere ein Wärmebild, der Umgebung und/oder eines Objekts zu verarbeiten, insbesondere zu einer Rauschoptimierung zu verarbeiten. Bevorzugt ist die Recheneinheit dazu vorgesehen, Bilddaten, insbesondere elektronische Bilddaten, zu einer Rauschoptimierung, insbesondere einer Mittelung, zu verarbeiten. Unter einer "Recheneinheit" soll insbesondere eine Einheit mit einem Informationseingang, einer Informationsverarbeitung und einer Informationsausgabe verstanden werden. Vorteilhaft weist die Recheneinheit zumindest einen Prozessor, einen Speicher, Ein- und Ausgabemittel, weitere elektrische Bauteile, ein Betriebsprogramm, Regelroutinen, Steuerroutinen und/oder Berechnungsroutinen auf. Vorzugsweise sind die Bauteile der Recheneinheit auf einer gemeinsamen Platine angeordnet und/oder vorteilhaft in einem gemeinsamen Gehäuse angeordnet. Vorzugsweise ist die Recheneinheit dazu vorgesehen, die, insbesondere mittels der Sensoreinheit erfasste, Bewegungskenngröße auszuwerten. Bevorzugt bestimmt die Recheneinheit die Intensität der Bewegungskenngröße. Besonders bevorzugt bestimmt die Recheneinheit zumindest in Abhängigkeit von der Bewegungskenngröße, insbesondere der Intensität der Bewegungskenngröße, zumindest eine Mittelungsfunktion zu einer Mittelung von zumindest zwei mittels der Kamera, insbesondere der Bilderfassungseinheit, erfassten Bildern, insbesondere Bilddaten. Bevorzugt ist mittels der Recheneinheit die Mittelungsfunktion zu einer Mittelung von zumindest zwei mittels der Kamera, insbesondere der Bilderfassungseinheit, erfassten Bildern, insbesondere Bilddaten, ausführbar. Besonders bevorzugt bestimmt die Recheneinheit in zumindest einem Betriebszustand in Abhängigkeit von der Bewegungskenngröße, insbesondere der Intensität der Bewegungskenngröße, die Mittelungsfunktion. Bevorzugt umfasst die Mittelungsfunktion zumindest einen Funktionsschritt zu einer Berechnung eines Durchschnitts, eines gleitenden Mittelwerts, eines gewichteten Mittelwerts oder eines weiteren, einem Fachmann als sinnvoll erscheinenden Mittelwerts der zumindest zwei zu mittelnden Bilder, insbesondere von Bilddaten der zumindest zwei zu mittelnden Bilder. Besonders bevorzugt werden in zumindest einem Verfahrensschritt mittels der Kamera erfasste Bilder, insbesondere mittels der Mittelungsfunktion, gemittelt, wobei eine Gesamtanzahl der erfassten Bilder gleich der Anzahl von zu mittelnden Bildern ist. Es ist denkbar, dass die zumindest eine Mittelungsfunktion von einem Bediener der Kamera, insbesondere mittels einer Bedieneinheit der Kamera, vorgebbar und/oder ausführbar ist.

Weiterhin wird vorgeschlagen, dass in zumindest einem Verfahrensschritt die Anzahl von zu mittelnden Bildern bei einer Änderung der Intensität der erfassten Bewegungskenngröße, insbesondere automatisch, verändert wird. Hierdurch kann vorteilhaft eine bewegungsadaptive Rauschreduzierung erreicht werden. Es kann vorteilhaft eine von einer Bewegung der Kamera abhängige Rauschreduzierung erreicht werden. Vorzugsweise wird die Anzahl von zu mittelnden Bildern aus der Intensität der Bewegungskenngröße, insbesondere der Änderung der Intensität der Bewegungskenngröße, berechnet, insbesondere mittels der Recheneinheit berechnet, bevorzugt mittels der Recheneinheit automatisch berechnet. Es ist denkbar, dass die Anzahl von zu mittelnden Bildern aus einem Anstieg, einem Gradienten, einer Änderungsrate, einer Änderungsgeschwindigkeit oder einem weiteren, einem Fachmann als sinnvoll erscheinenden Maß der Änderung der Intensität der Bewegungskenngröße berechnet wird. Bevorzugt wird die Anzahl von zu mittelnden Bildern, insbesondere ausgehend von einer Anzahl größer als Eins, bei einem Ansteigen der Intensität der Bewegungskenngröße verringert, insbesondere auf Eins verringert. Bevorzugt wird die Anzahl von zu mittelnden Bildern, insbesondere ausgehend von einer Anzahl von mindestens Eins, bei einem Abfallen der Intensität der Bewegungskenngröße erhöht, insbesondere auf Zwei oder eine ganzzahlige Zahl größer als Zwei erhöht. Beispielsweise ist denkbar, dass die Anzahl von zu mittelnden Bildern proportional zu einer Änderungsrate einer als räumliche Position der Kamera ausgebildeten Intensität der Bewegungskenngröße bestimmt wird, so dass insbesondere je Änderung pro Sekunde der räumlichen Position der Kamera die Anzahl von zu mittelnden Bildern erhöht wird. Beispielsweise wird die Anzahl von zu mittelnden Bildern je Änderung pro Sekunde der räumlichen Position der Kamera um Eins erhöht. Es sind weitere Ausgestaltungen einer Bestimmung der Anzahl von zu mittelnden Bildern aus der Intensität der Bewegungskenngröße denkbar, insbesondere soll die hierin dargestellte Erfindung nicht auf die oben stehenden Beispiele beschränkt sein. Alternativ oder zusätzlich ist denkbar, dass die Anzahl von zu mittelnden Bildern in Abhängigkeit von einem Über- und/oder Unterschreiten zumindest eines Schwellenwerts durch die Intensität der Bewegungskenngröße bestimmt wird. Es ist denkbar, dass die Anzahl von zu mittelnden Bildern, insbesondere ausgehend von einer Anzahl größer als Eins, bei einem Überschreiten des zumindest einen Schwellenwerts durch die Intensität der Bewegungskenngröße verringert wird, insbesondere auf Eins verringert wird. Weiterhin ist denkbar, dass die Anzahl von zu mittelnden Bildern, insbesondere ausgehend von einer Anzahl von mindestens Eins, bei einem Unterschreiten des zumindest einen Schwellenwerts durch die Intensität der Bewegungskenngröße erhöht wird, insbesondere auf Zwei oder eine ganzzahlige Zahl größer als Zwei erhöht wird. Beispielsweise ist denkbar, dass die Anzahl von zu mittelnden Bildern von Eins auf Zwei erhöht wird, wenn eine als Betrag einer Geschwindigkeit der Kamera ausgebildete Intensität der Bewegungskenngröße einen Schwellenwert von 1 m/s unterschreitet. Beispielsweise ist weiterhin denkbar, dass die Anzahl von zu mittelnden Bildern auf Eins verringert wird, wenn die als Betrag der Geschwindigkeit der Kamera ausgebildete Intensität der Bewegungskenngröße den Schwellenwert von 1 m/s überschreitet. Es sind weitere Ausgestaltungen, insbesondere des zumindest einen Schwellenwerts, denkbar, insbesondere soll die hierin dargestellte Erfindung nicht auf die oben stehenden Beispiele beschränkt sein.

Ferner wird vorgeschlagen, dass in zumindest einem Verfahrensschritt in Abhängigkeit von der Bewegungskenngröße zumindest eine Bildwiederholrate, insbesondere einer Anzeigeeinheit und/oder einer Sensoreinheit, der Kamera bestimmt wird. Hierdurch kann vorteilhaft eine rauscharme Darstellung eines mittels der Kamera erfassten Bildes erreicht werden. Es kann vorteilhaft eine von einer Bewegung der Kamera abhängige Rauschreduzierung erreicht werden. Unter einer "Bildwiederholrate einer Kamera" soll insbesondere eine Rate, bevorzugt eine Frequenz, verstanden werden, mit der die Kamera Bilder erfasst und/oder erfasste, insbesondere gemittelte, Bilder anzeigt. Vorzugsweise weist die Bildwiederholrate einen Wert von größer als 10 Hz, bevorzugt von größer als 25 Hz, besonders bevorzugt von größer als 50 Hz auf. Es ist denkbar, dass die Anzeigeeinheit der Kamera eine Bildwiederholrate aufweist, die von einer Bildwiederholrate der Sensoreinheit der Kamera verschieden ist. Alternativ ist denkbar, dass die Anzeigeeinheit und die Sensoreinheit die gleiche Bildwiederholrate aufweisen. Vorzugsweise wird die Bildwiederholrate der Anzeigeeinheit und/oder der Sensoreinheit in Abhängigkeit von der Intensität der Bewegungskenngröße bestimmt. Bevorzugt wird die Bildwiederholrate der Anzeigeeinheit und/oder der Sensoreinheit mittels der Intensität der Bewegungskenngröße berechnet. Vorzugsweise wird die Bildwiederholrate der Anzeigeeinheit ausgehend von einem Wert größer als 10 Hz bei einem Abfallen der Intensität der Bewegungskenngröße verringert, insbesondere auf 10 Hz verringert. Vorzugsweise wird die Bildwiederholrate der Anzeigeeinheit bei einem Ansteigen der Intensität der Bewegungskenngröße erhöht. Es ist denkbar, dass eine Bildwiederholrate der Sensoreinheit bei einem Abfallen der Intensität der Bewegungskenngröße verringert wird. Weiterhin ist denkbar, dass eine Bildwiederholrate der Sensoreinheit bei einem Ansteigen der Intensität der Bewegungskenngröße erhöht wird.

Des Weiteren wird vorgeschlagen, dass die Sensoreinheit zumindest ein Lichtsensorelement, insbesondere eine im visuellen und/oder infraroten Lichtspektrum arbeitende Kamera, aufweist, das dazu vorgesehen ist, eine als ein optischer Unterschied, insbesondere eine Pixelverschiebung, zwischen zumindest zwei mittels der Kamera erfassten Bildern ausgebildete Bewegungskenngröße zu erfassen. Hierdurch kann vorteilhaft eine Bewegung der Kamera anhand von erfassten Bildern zu einer bewegungsadaptiven Rauschoptimierung erkannt werden. Es kann vorteilhaft eine von einer Bewegung der Kamera abhängige Rauschreduzierung erreicht werden. Vorzugsweise ist das Lichtsensorelement als zumindest eine weitere Kamera, insbesondere eine im visuellen und/oder infraroten Lichtspektrum arbeitende weitere Kamera, ausgebildet. Es ist denkbar, dass das Lichtsensorelement mit der Bilderfassungseinheit als Einheit ausgeführt ist. Vorzugsweise ist das Lichtsensorelement zu einer ortsaufgelösten Abbildung zumindest eines räumlichen Bereichs, insbesondere der Umgebung der Kamera, bevorzugt der mittels der Bilderfassungseinheit erfassten Umgebung der Kamera, vorgesehen. Besonders bevorzugt erfassen das Lichtsensorelement und die Bilderfassungseinheit jeweils ein Bild der Umgebung zumindest im Wesentlichen zeitgleich. Unter "im Wesentlichen zeitgleich" soll insbesondere verstanden werden, dass ein zeitlicher Abstand eines Erfassungszeitpunkts eines Bilds des Lichtsensorelements von einem Erfassungszeitpunkt eines Bilds der Bilderfassungseinheit vorzugsweise kleiner als 10 ms ist, bevorzugt kleiner als 2 ms, besonders bevorzugt kleiner als 1 ms. Unter "zumindest im Wesentlichen" soll in diesem Zusammenhang insbesondere verstanden werden, dass eine Abweichung von einem vorgegebenen Wert insbesondere weniger als 25%, vorzugsweise weniger als 10% und besonders bevorzugt weniger als 5% des vorgegebenen Werts beträgt. Bevorzugt ist der Erfassungszeitpunkt des Bilds des Lichtsensorelements identisch mit dem Erfassungszeitpunkt des Bilds der Bilderfassungseinheit. Vorzugsweise übermittelt die Sensoreinheit das Bild des Lichtsensors zu einer Auswertung an die Recheneinheit. Vorzugsweise führt die Recheneinheit eine Merkmalserkennung zumindest eines Bildmerkmals, insbesondere einer Kante, einer Ecke, eines Musters, einer Fläche, einer Farbe oder eines weiteren, einem Fachmann als sinnvoll erscheinenden Bildmerkmals des Bilds des Lichtsensorelements aus. Bevorzugt bestimmt die Recheneinheit zumindest eine Position des Bildmerkmals in dem Bild des Lichtsensorelements relativ zu einer Position des Bildmerkmals in einem weiteren, insbesondere zeitlich vor dem Bild des Lichtsensorelements erfassten, Bild des Lichtsensorelements. Besonders bevorzugt bestimmt die Recheneinheit einen räumlichen Abstand der Position des Bildmerkmals in dem Bild des Lichtsensorelements von der Position des Bildmerkmals in dem weiteren, insbesondere zeitlich vor dem Bild des Lichtsensorelements erfassten, Bild des Lichtsensorelements. Vorzugsweise ist der räumliche Abstand als eine Pixelverschiebung ausgebildet.

Weiterhin wird vorgeschlagen, dass die Sensoreinheit zumindest ein Temperatursensorelement, insbesondere eine Thermosäule, aufweist, das dazu vorgesehen ist, eine als zumindest eine Temperaturänderung ausgebildete Bewegungskenngröße zu erfassen. Hierdurch kann vorteilhaft eine Bewegung der Kamera relativ zu einer Wärmequelle und/oder einer Wärmesenke zu einer bewegungsadaptiven Rauschoptimierung erkannt werden. Es kann vorteilhaft eine von einer Bewegung der Kamera abhängige Rauschreduzierung erreicht werden. Es ist denkbar, dass das Temperatursensorelement als Focal Plane Array, als Thermoelement, als Thermometer oder als ein weiteres, einem Fachmann als sinnvoll erscheinendes Temperatursensorelement ausgebildet ist. Bevorzugt ist das Temperatursensorelement als eine Thermosäule ausgebildet. Vorzugsweise erfasst das Temperatursensorelement zumindest einen zeitlichen Verlauf einer Temperatur, insbesondere die Temperaturänderung. Vorzugsweise bestimmt die Recheneinheit mittels der Temperaturänderung die Anzahl von zu mittelnden Bildern. Es ist denkbar, dass die Recheneinheit die Anzahl von zu mittelnden Bildern proportional oder antiproportional zu der Temperaturänderung oder gemäß einer weiteren, einem Fachmann als sinnvoll erscheinenden mathematischen Abhängigkeit von der Temperaturänderung verändert.

Ferner wird vorgeschlagen, dass die Sensoreinheit zumindest ein Helligkeitssensorelement, insbesondere eine im visuellen Spektrum arbeitende Kamera, aufweist, die dazu vorgesehen ist, zumindest eine als zumindest eine Helligkeitsänderung ausgebildete Bewegungskenngröße zu erfassen. Hierdurch kann vorteilhaft eine Bewegung der Kamera relativ zu einem lichtemittierenden oder lichtabsorbierenden Objekt zu einer bewegungsadaptiven Rauschoptimierung erkannt werden. Es kann vorteilhaft eine von einer Bewegung der Kamera abhängige Rauschreduzierung erreicht werden. Es ist denkbar, dass das Helligkeitssensorelement als eine zusätzliche Kamera, insbesondere eine zusätzliche im visuellen Spektrum arbeitende Kamera, als lichtempfindlicher Pixel oder als ein weiteres, einem Fachmann als sinnvoll erscheinendes Helligkeitssensorelement ausgebildet ist. Weiterhin ist denkbar, dass das Helligkeitssensorelement als Einheit mit der Bilderfassungseinheit und/oder dem Lichtsensorelement ausgeführt ist. Ferner ist denkbar, dass die Bilderfassungseinheit und/oder das Lichtsensorelement als Helligkeitssensorelement nutzbar sind. Vorzugsweise erfasst das Helligkeitssensorelement zumindest einen zeitlichen Verlauf einer Helligkeit, insbesondere die Helligkeitsänderung. Vorzugsweise bestimmt die Recheneinheit mittels der Helligkeitsänderung die Anzahl von zu mittelnden Bildern. Es ist denkbar, dass die Recheneinheit die Anzahl von zu mittelnden Bildern proportional oder antiproportional zu der Helligkeitsänderung oder gemäß einer weiteren, einem Fachmann als sinnvoll erscheinenden mathematischen Abhängigkeit von der Helligkeitsänderung verändert.

Des Weiteren wird vorgeschlagen, dass die Sensoreinheit zumindest ein Positionssensorelement und/oder ein Bewegungssensorelement, insbesondere einen GPS-Sensor, ein Geschwindigkeitssensorelement, ein Inertialsensorelement und/oder ein Drehratensensorelement, aufweist, der dazu vorgesehen ist, zumindest eine als zumindest eine räumliche Position, eine Geschwindigkeit, eine Drehrate und/oder eine Beschleunigung der Kamera ausgebildete Bewegungskenngröße zu erfassen. Hierdurch kann vorteilhaft eine Bewegung der Kamera zu einer bewegungsadaptiven Rauschoptimierung direkt gemessen werden. Es kann vorteilhaft eine von einer Bewegung der Kamera abhängige Rauschreduzierung erreicht werden.

Weiterhin wird eine Kamera nach Anspruch 8 vorgeschlagen, mit zumindest einer Bilderfassungseinheit, die dazu vorgesehen ist, zumindest ein Bild, insbesondere ein Wärmebild, einer Umgebung zu erfassen, mit zumindest einer Sensoreinheit, die dazu vorgesehen ist, zumindest eine Bewegungskenngröße zu erfassen, und mit zumindest einer Recheneinheit, die dazu vorgesehen ist, die zumindest eine Bewegungskenngröße zu einer Rauschoptimierung, insbesondere gemäß einem Verfahren nach einem der vorhergehenden Ansprüche, zu verarbeiten, wobei mittels der Recheneinheit zumindest in Abhängigkeit von einer Intensität, insbesondere einer Änderungsrate, der Bewegungskenngröße zumindest eine Anzahl zu mittelnder mittels der Kamera erfasster Bilder bestimmt wird. Hierdurch kann vorteilhaft eine Kamera bereitgestellt werden, die eine von einer Bewegung der Kamera abhängige Rauschreduzierung erlaubt. Es kann vorteilhaft eine Kamera mit verbesserter Bildqualität, insbesondere bei einer geringen Bewegung der Kamera, bereitgestellt werden. Es kann vorteilhaft eine Kamera mit einer einfach zu berechnenden Rauschreduzierungsfunktion bereitgestellt werden.

Ferner wird vorgeschlagen, dass zumindest eine Sensoreinheit zumindest ein Inertialsensorelement aufweist, das dazu vorgesehen ist, eine als Beschleunigung und/oder als Drehrate ausgebildete Bewegungskenngröße zu erfassen. Hierdurch kann vorteilhaft mittels des Inertialsensorelements eine Bewegung der Kamera zu einer bewegungsadaptiven Rauschoptimierung direkt gemessen werden. Es kann vorteilhaft eine Kamera bereitgestellt werden, die eine von einer Bewegung der Kamera abhängige Rauschreduzierung erlaubt.

Des Weiteren wird vorgeschlagen, dass die zumindest eine Sensoreinheit zumindest ein Magnetfeldsensorelement aufweist, das dazu vorgesehen ist, eine als eine räumliche Lageänderung relativ zu einem Magnetfeld, insbesondere einem Erdmagnetfeld, ausgebildete Bewegungskenngröße zu erfassen. Hierdurch kann vorteilhaft mittels des Magnetfeldsensorelements eine Bewegung der Kamera relativ zu einem Magnetfeld zu einer bewegungsadaptiven Rauschoptimierung gemessen werden. Es kann vorteilhaft eine Kamera bereitgestellt werden, die eine von einer Bewegung der Kamera abhängige Rauschreduzierung erlaubt.

### Zeichnung

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine perspektivische Vorderansicht einer Kamera in einer schematischen Darstellung,
- Fig. 2: eine perspektivische Rückansicht der Kamera aus Figur 1 in einer schematischen Darstellung und
- Fig. 3: ein Ablaufdiagramm eines Verfahrens zu einer Rauschoptimierung einer Kamera.

### Beschreibung des Ausführungsbeispiels

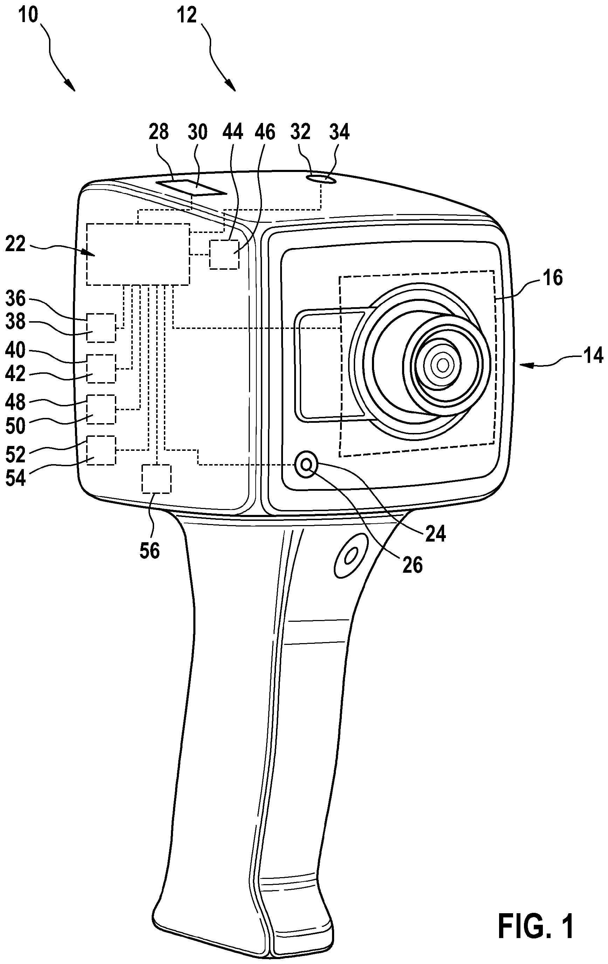

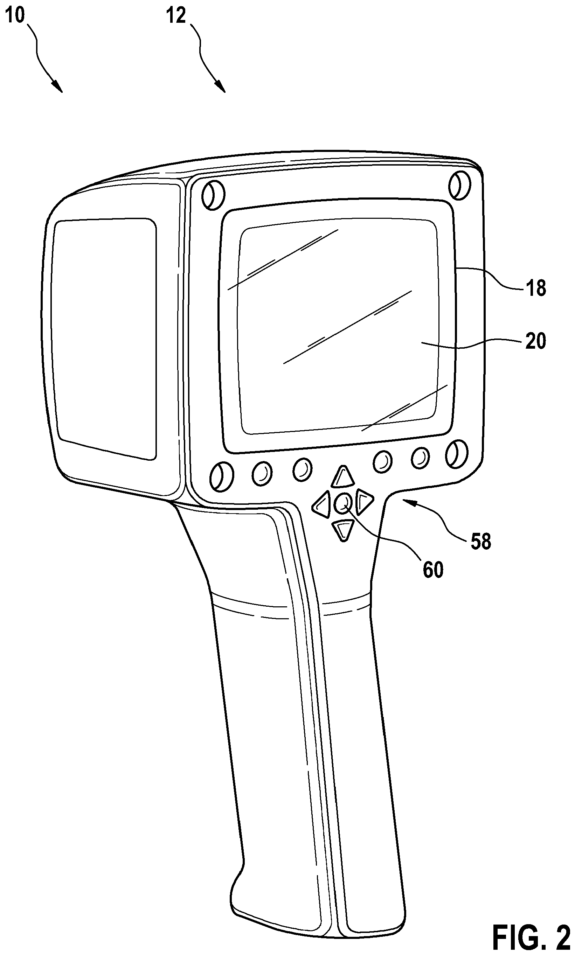

In den Figuren 1 und 2 ist ein Ausführungsbeispiel einer Kamera 10 dargestellt. Die Kamera 10 ist als handgehaltene Wärmebildkamera 12 ausgebildet. Die Kamera 10 weist eine Bilderfassungseinheit 14 auf, die in zumindest einem Betriebszustand ein Bild, insbesondere ein Wärmebild, einer Umgebung der Kamera 10 erfasst. Die Bilderfassungseinheit 14 umfasst einen Infrarotbildsensor 16. Der Infrarotbildsensor 16 ist als Focal Plane Array ausgebildet.

Die Kamera 10 weist eine Anzeigeeinheit 18 auf. Die Anzeigeeinheit 18 ist als ein Display 20 ausgebildet. Die Anzeigeeinheit 18 zeigt in zumindest einem Betriebszustand das Bild, insbesondere das Wärmebild, an. Die Anzeigeeinheit 18 zeigt in zumindest einem Betriebszustand ein gemitteltes Bild, insbesondere ein gemitteltes Wärmebild, an. Die Anzeigeeinheit 18 zeigt Bilder, insbesondere Wärmebilder, mit einer Bildwiederholrate von größer als 10 Hz an.

Die Kamera 10 weist eine Sensoreinheit 22 auf. Die Sensoreinheit 22 erfasst in zumindest einem Betriebszustand eine Bewegungskenngröße. Die Sensoreinheit 22 erfasst in zumindest einem Betriebszustand die Bewegungskenngröße zumindest im Wesentlichen zeitgleich mit einer Erfassung des Bildes mittels der Bilderfassungseinheit 14. Die Sensoreinheit 22 erfasst in zumindest einem Betriebszustand die Bewegungskenngröße kontinuierlich.

Die Sensoreinheit 22 weist ein Lichtsensorelement 24 auf. Das Lichtsensorelement 24 ist als eine im visuellen Spektrum arbeitende VIS-Kamera 26 ausgebildet. Das Lichtsensorelement 24 erfasst in zumindest einem Betriebszustand eine als ein optischer Unterschied, insbesondere eine Pixelverschiebung, zwischen zumindest zwei mittels der Kamera 10 erfassten Bildern ausgebildete Bewegungskenngröße. Die Sensoreinheit 22 ist mit der Bilderfassungseinheit 14 zu einer Übertragung von, insbesondere erfassten, Bildern, insbesondere Wärmebildern, mittels einer elektrischen Verbindung, insbesondere einer elektronischen Datenverbindung, verbunden.

Die Sensoreinheit 22 weist ein Temperatursensorelement 28 auf. Das Temperatursensorelement 28 ist als Thermosäule 30 ausgebildet. Das Temperatursensorelement 28 erfasst in zumindest einem Betriebszustand eine als eine Temperaturänderung ausgebildete Bewegungskenngröße.

Die Sensoreinheit 22 weist ein Helligkeitssensorelement 32 auf. Das Helligkeitssensorelement 32 ist als lichtempfindlicher Pixel 34 ausgebildet. Das Helligkeitssensorelement 32 erfasst in zumindest einem Betriebszustand eine als eine Helligkeitsänderung ausgebildete Bewegungskenngröße.

Die Sensoreinheit 22 weist ein Positionssensorelement 36 auf. Das Positionssensorelement 36 ist als GPS-Sensor 38 ausgebildet. Das Positionssensorelement 36 erfasst in zumindest einem Betriebszustand eine als eine räumliche Position ausgebildete Bewegungskenngröße.

Die Sensoreinheit 22 weist ein weiteres Positionssensorelement 40 auf. Das weitere Positionssensorelement 40 ist als Magnetfeldsensorelement 42 ausgebildet. Das weitere Positionssensorelement 40 erfasst in zumindest einem Betriebszustand eine als eine räumliche Lageänderung relativ zu einem Magnetfeld, insbesondere einem Erdmagnetfeld, ausgebildete Bewegungskenngröße.

Die Sensoreinheit 22 weist ein Bewegungssensorelement 44 auf. Das Bewegungssensorelement 44 ist als Geschwindigkeitssensorelement 46 ausgebildet. Das Bewegungssensorelement 44 erfasst in zumindest einem Betriebszustand eine als Geschwindigkeit ausgebildete Bewegungskenngröße.

Die Sensoreinheit 22 weist ein weiteres Bewegungssensorelement 48 auf. Das weitere Bewegungssensorelement 48 ist als Inertialsensorelement 50 ausgebildet. Das weitere Bewegungssensorelement 48 erfasst in zumindest einem Betriebszustand eine als Beschleunigung und/oder als Drehrate ausgebildete Bewegungskenngröße.

Die Sensoreinheit 22 weist ein zusätzliches Bewegungssensorelement 52 auf. Das zusätzliche Bewegungssensorelement 52 ist als Drehratensensorelement 54 ausgebildet. Das zusätzliche Bewegungssensorelement 48 erfasst in zumindest einem Betriebszustand eine als Drehrate ausgebildete Bewegungskenngröße.

Die Kamera 10 weist eine Recheneinheit 56 auf. Die Recheneinheit 56 verarbeitet in zumindest einem Betriebszustand die erfasste Bewegungskenngröße zu einer Rauschoptimierung der Kamera 10. Die Recheneinheit 56 bestimmt in zumindest einem Betriebszustand in Abhängigkeit von einer Intensität, insbesondere einer Änderungsrate, der Bewegungskenngröße zumindest eine Anzahl zu mittelnder mittels der Kamera 10 erfasster Bilder. Die Recheneinheit 56 ist mit der Sensoreinheit 22 zu einer Übertragung von Sensordaten mittels einer elektrischen Verbindung, insbesondere einer elektronischen Datenverbindung, verbunden. Die Recheneinheit 56 wertet in zumindest einem Betriebszustand die von der Sensoreinheit 22 erfasste Bewegungskenngröße und/oder die von der Bilderfassungseinheit 14 erfassten Bilder, insbesondere Wärmebilder, aus. Die Recheneinheit 56 bestimmt in zumindest einem Betriebszustand in Abhängigkeit von der von der Sensoreinheit 22 erfassten Bewegungskenngröße und/oder von den von der Bilderfassungseinheit 14 erfassten Bildern, insbesondere Wärmebildern, zumindest eine Mittelungsfunktion zu einer Mittelung von Bilddaten. Die Recheneinheit 56 führt in zumindest einem Betriebszustand die zumindest eine Mittelungsfunktion aus.

Die Kamera 10 weist eine Bedieneinheit 58 auf. Die Bedieneinheit 58 umfasst ein Bedienelement 60. Das Bedienelement 60 ist als Bedienfeld ausgebildet. Mittels der Bedieneinheit 58 ist die zumindest eine Mittelungsfunktion ausführbar. Mittels der Bedieneinheit 58 ist das, insbesondere erfasste und/oder gemittelte, Bild, insbesondere das Wärmebild, speicherbar.

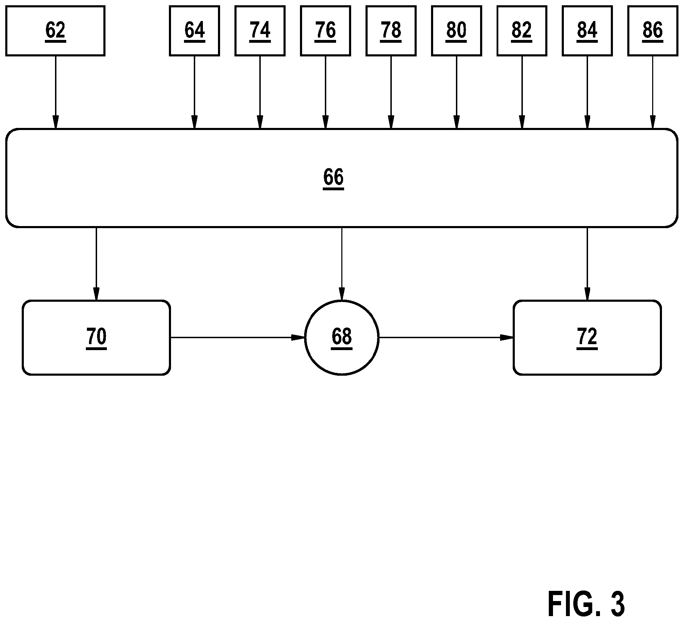

In Figur 3 ist ein Ablaufdiagramm eines Verfahrens zu einer Rauschoptimierung der Kamera 10 dargestellt. In zumindest einem Verfahrensschritt 62 werden Bilder, insbesondere Wärmebilder, mittels der Kamera 10 erfasst.

In zumindest einem Verfahrensschritt 64 wird zumindest eine Bewegungskenngröße mittels der Sensoreinheit 22 der Kamera 10 erfasst. Die Sensoreinheit 22 übermittelt die erfasste Bewegungskenngröße zu einer Auswertung an die Recheneinheit 56. Die Recheneinheit 56 bestimmt eine Intensität der erfassten Bewegungskenngröße. Die Recheneinheit 56 bestimmt in Abhängigkeit von der erfassten Bewegungskenngröße eine Mittelungsfunktion zu einer Mittelung von mittels der Kamera 10 erfassten Bildern. Die Recheneinheit 56 bestimmt in Abhängigkeit von der Intensität der erfassten Bewegungskenngröße eine Mittelungsfunktion zu einer Mittelung von mittels der Kamera 10 erfassten Bildern.

In zumindest einem Verfahrensschritt 74 wird mittels des Lichtsensorelements 24 eine als ein optischer Unterschied, insbesondere eine Pixelverschiebung, zwischen zumindest zwei mittels der Kamera 10 erfassten Bildern ausgebildete Bewegungskenngröße erfasst. Die Sensoreinheit 22 übermittelt die als ein optischer Unterschied ausgebildete erfasste Bewegungskenngröße zu einer Auswertung an die Recheneinheit 56. Die Recheneinheit 56 bestimmt eine als Betrag einer Pixelverschiebung ausgebildete Intensität der als ein optischer Unterschied ausgebildeten erfassten Bewegungskenngröße. Die Recheneinheit 56 bestimmt in Abhängigkeit von dem erfassten optischen Unterschied eine Mittelungsfunktion zu einer Mittelung von mittels der Kamera 10 erfassten Bildern. Die Recheneinheit 56 bestimmt in Abhängigkeit von dem Betrag der Pixelverschiebung eine Mittelungsfunktion zu einer Mittelung von mittels der Kamera 10 erfassten Bildern.

In zumindest einem Verfahrensschritt 76 wird mittels des Temperatursensorelements 28 eine als zumindest eine Temperaturänderung ausgebildete Bewegungskenngröße erfasst. Die Sensoreinheit 22 übermittelt die erfasste Temperaturänderung zu einer Auswertung an die Recheneinheit 56. Die Recheneinheit 56 bestimmt eine als Betrag der Temperaturänderung ausgebildete Intensität der erfassten Bewegungskenngröße. Die Recheneinheit 56 bestimmt in Abhängigkeit von der erfassten Temperaturänderung eine Mittelungsfunktion zu einer Mittelung von mittels der Kamera 10 erfassten Bildern. Die Recheneinheit 56 bestimmt in Abhängigkeit von dem Betrag der Temperaturänderung eine Mittelungsfunktion zu einer Mittelung von mittels der Kamera 10 erfassten Bildern.

In zumindest einem Verfahrensschritt 78 wird mittels des Helligkeitssensorelements 32 eine als zumindest eine Helligkeitsänderung ausgebildete Bewegungskenngröße erfasst. Die Sensoreinheit 22 übermittelt die erfasste Helligkeitsänderung zu einer Auswertung an die Recheneinheit 56. Die Recheneinheit 56 bestimmt eine als Betrag der Helligkeitsänderung ausgebildete Intensität der erfassten Bewegungskenngröße. Die Recheneinheit 56 bestimmt in Abhängigkeit von der erfassten Helligkeitsänderung eine Mittelungsfunktion zu einer Mittelung von mittels der Kamera 10 erfassten Bildern. Die Recheneinheit 56 bestimmt in Abhängigkeit von dem Betrag der Helligkeitsänderung eine Mittelungsfunktion zu einer Mittelung von mittels der Kamera 10 erfassten Bildern.

In zumindest einem Verfahrensschritt 80 wird mittels des, insbesondere weiteren, Positionssensorelements 36, 40 eine als eine räumliche Position der Kamera 10 ausgebildete Bewegungskenngröße erfasst. Die Sensoreinheit 22 übermittelt die erfasste räumliche Position der Kamera 10 zu einer Auswertung an die Recheneinheit 56. Die Recheneinheit 56 bestimmt eine als Änderung der räumlichen Position der Kamera 10 ausgebildete Intensität der erfassten Bewegungskenngröße. Die Recheneinheit 56 bestimmt in Abhängigkeit von der erfassten räumlichen Position der Kamera 10 eine Mittelungsfunktion zu einer Mittelung von mittels der Kamera 10 erfassten Bildern. Die Recheneinheit 56 bestimmt in Abhängigkeit von der zeitlichen Änderung der räumlichen Position eine Mittelungsfunktion zu einer Mittelung von mittels der Kamera 10 erfassten Bildern.

In zumindest einem Verfahrensschritt 82 wird mittels des Bewegungssensorelements 44 eine als eine Geschwindigkeit der Kamera 10 ausgebildete Bewegungskenngröße erfasst. Die Sensoreinheit 22 übermittelt die erfasste Geschwindigkeit zu einer Auswertung an die Recheneinheit 56. Die Recheneinheit 56 bestimmt eine als Betrag der Geschwindigkeit ausgebildete Intensität der erfassten Bewegungskenngröße. Die Recheneinheit 56 bestimmt in Abhängigkeit von der erfassten Geschwindigkeit eine Mittelungsfunktion zu einer Mittelung von mittels der Kamera 10 erfassten Bildern. Die Recheneinheit 56 bestimmt in Abhängigkeit von dem Betrag der Geschwindigkeit eine Mittelungsfunktion zu einer Mittelung von mittels der Kamera 10 erfassten Bildern.

In zumindest einem Verfahrensschritt 84 wird mittels des, insbesondere weiteren oder zusätzlichen, Bewegungssensorelements 48, 52 eine als eine Drehrate der Kamera 10 ausgebildete Bewegungskenngröße erfasst. Die Sensoreinheit 22 übermittelt die erfasste Drehrate zu einer Auswertung an die Recheneinheit 56. Die Recheneinheit 56 bestimmt eine als Betrag der Drehrate ausgebildete Intensität der erfassten Bewegungskenngröße. Die Recheneinheit 56 bestimmt in Abhängigkeit von der erfassten Drehrate eine Mittelungsfunktion zu einer Mittelung von mittels der Kamera 10 erfassten Bildern. Die Recheneinheit 56 bestimmt in Abhängigkeit von dem Betrag der Drehrate eine Mittelungsfunktion zu einer Mittelung von mittels der Kamera 10 erfassten Bildern.

In zumindest einem Verfahrensschritt 86 wird mittels des, insbesondere weiteren, Bewegungssensorelements 44, 48 eine als eine Beschleunigung der Kamera 10 ausgebildete Bewegungskenngröße erfasst. Die Sensoreinheit 22 übermittelt die erfasste Beschleunigung zu einer Auswertung an die Recheneinheit 56. Die Recheneinheit 56 bestimmt eine als Betrag der Beschleunigung ausgebildete Intensität der erfassten Bewegungskenngröße. Die Recheneinheit 56 bestimmt in Abhängigkeit von der erfassten Beschleunigung eine Mittelungsfunktion zu einer Mittelung von mittels der Kamera 10 erfassten Bildern. Die Recheneinheit 56 bestimmt in Abhängigkeit von dem Betrag der Beschleunigung eine Mittelungsfunktion zu einer Mittelung von mittels der Kamera 10 erfassten Bildern.

In zumindest einem Verfahrensschritt 66 wird in Abhängigkeit von einer Intensität, insbesondere einer Änderungsrate, der erfassten Bewegungskenngröße mittels der Recheneinheit 56 der Kamera 10 zumindest eine Anzahl von zu mittelnden Bildern bestimmt. Die Recheneinheit 56 berechnet mittels der Intensität der erfassten Bewegungskenngröße die Anzahl von zu mittelnden Bildern. Die Recheneinheit 56 berechnet die Anzahl von zu mittelnden Bildern proportional zu einer Änderung, insbesondere einer Änderungsrate, der Intensität der erfassten Bewegungskenngröße.

In zumindest einem Verfahrensschritt 70 wird die Anzahl von zu mittelnden Bildern bei einer Änderung der Intensität der erfassten Bewegungskenngröße automatisch verändert. Die Recheneinheit 56 verringert die Anzahl von zu mittelnden Bildern ausgehend von einer Anzahl größer als Eins bei einem Ansteigen der Intensität der Bewegungskenngröße. Die Recheneinheit 56 verringert die Anzahl von zu mittelnden Bildern auf Eins bei einem Wert der Intensität der Bewegungskenngröße von Null. Die Recheneinheit 56 erhöht die Anzahl von zu mittelnden Bildern ausgehend von einer Anzahl von mindestens Eins bei einem Abfallen der Intensität der Bewegungskenngröße auf eine ganzzahlige Zahl größer als Eins. Die Recheneinheit 56 verringert die Anzahl von zu mittelnden Bildern ausgehend von einer Anzahl größer als Eins bei einem Überschreiten eines Schwellenwerts durch die Intensität der Bewegungskenngröße. Die Recheneinheit 56 erhöht die Anzahl von zu mittelnden Bildern ausgehend von einer Anzahl von mindestens Eins bei einem Unterschreiten eines weiteren Schwellenwerts durch die Intensität der Bewegungskenngröße auf eine ganzzahlige Zahl größer als Eins.

In zumindest einem Verfahrensschritt 68 wird mittels der Recheneinheit 56 der Kamera 10 eine Mittelung von Bilddaten von erfassten Bildern durchgeführt. Die Recheneinheit 56 führt die in Abhängigkeit von der erfassten Bewegungskenngröße bestimmte Mittelungsfunktion für die Bilder der Anzahl von zu mittelnden Bildern aus. Die Mittelungsfunktion umfasst zumindest einen Funktionsschritt zu einer, insbesondere gewichteten, Mittelwertbildung der Bilder der Anzahl von zu mittelnden Bildern. Die Recheneinheit 56 speichert das Ergebnis der Mittelungsfunktion, insbesondere ein gemitteltes Bild und/oder ein gemitteltes Wärmebild, ab. Die Recheneinheit 56 übermittelt das gemittelte Bild und/oder das gemittelte Wärmebild zu einer Ausgabe an die Anzeigeeinheit 18.

In zumindest einem Verfahrensschritt 72 wird eine Bildwiederholrate der Anzeigeeinheit 18 und/oder der Sensoreinheit 22 der Kamera 10 bestimmt. Die Recheneinheit 56 bestimmt die Bildwiederholrate der Anzeigeeinheit 18 in Abhängigkeit von der Intensität der Bewegungskenngröße. Die Recheneinheit 56 verringert die Bildwiederholrate der Anzeigeeinheit 18 ausgehend von einem Wert größer als 10 Hz bei einem Abfallen der Intensität der Bewegungskenngröße. Die Recheneinheit 56 erhöht die Bildwiederholrate der Anzeigeeinheit 18 ausgehend von einem Wert von mindestens 10 Hz bei einem Ansteigen der Intensität der Bewegungskenngröße. Die Anzeigeeinheit 18 zeigt mittels der Kamera 10 erfasste Bilder mit der Bildwiederholrate an. Die Anzeigeeinheit 18 zeigt mittels der Kamera 10 erfasste und mittels der Recheneinheit 56 gemittelte Bilder mit der Bildwiederholrate an. Die Sensoreinheit 22 weist eine konstante Bildwiederholrate auf.

Hinsichtlich weiterer Verfahrensschritte des Verfahrens zu einer Rauschoptimierung der Kamera 10 darf auf die vorhergehende Beschreibung der Kamera 10 verwiesen werden, da diese Beschreibung analog auch auf das Verfahren zu lesen ist und somit alle Merkmale hinsichtlich der Kamera 10 auch in Bezug auf das Verfahren zu einer Rauschoptimierung der Kamera 10 als offenbart gelten.

## Patentansprüche

1. Verfahren zu einer Rauschoptimierung einer Kamera (10), insbesondere einer handgehaltenen Wärmebildkamera (12), wobei mittels der Kamera (10) in zumindest einem Verfahrensschritt (62) Bilder erfasst werden, wobei in zumindest einem Verfahrensschritt (64) zumindest eine Bewegungskenngröße mittels zumindest einer Sensoreinheit (22) der Kamera (10) erfasst wird und wobei in zumindest einem Verfahrensschritt (68) mittels einer Recheneinheit (56) der Kamera (10) eine Mittelung von Bilddaten von erfassten Bildern durchgeführt wird, **dadurch gekennzeichnet, dass** in zumindest einem Verfahrensschritt (66) zumindest in Abhängigkeit von einer Intensität, insbesondere einer Änderungsrate, der erfassten Bewegungskenngröße mittels der Recheneinheit (56) der Kamera (10) zumindest eine Anzahl von zu mittelnden Bildern bestimmt wird.

2. Verfahren nach Anspruch 1, **dadurch gekennzeichnet, dass** in zumindest einem Verfahrensschritt (70) die Anzahl von zu mittelnden Bildern bei einer Änderung der Intensität der erfassten Bewegungskenngröße, insbesondere automatisch, verändert wird.

3. Verfahren nach einem der vorhergehenden Ansprüche, **dadurch gekennzeichnet, dass** in zumindest einem Verfahrensschritt (72) in Abhängigkeit von der Bewegungskenngröße zumindest eine Bildwiederholrate, insbesondere einer Anzeigeeinheit (18) und/oder der Sensoreinheit (22), der Kamera (10) bestimmt wird.

4. Verfahren nach einem der vorhergehenden Ansprüche, **dadurch gekennzeichnet, dass** die Sensoreinheit (22) zumindest ein Lichtsensorelement (24), insbesondere eine im visuellen und/oder infraroten Lichtspektrum arbeitende Kamera (26), aufweist, das dazu vorgesehen ist, eine als ein optischer Unterschied, insbesondere eine Pixelverschiebung, zwischen zumindest zwei mittels der Kamera (10) erfassten Bildern ausgebildete Bewegungskenngröße zu erfassen.

5. Verfahren nach einem der vorhergehenden Ansprüche, **dadurch gekennzeichnet, dass** die Sensoreinheit (22) zumindest ein Temperatursensorelement (28), insbesondere eine Thermosäule (30), aufweist, das dazu vorgesehen ist, eine als zumindest eine Temperaturänderung ausgebildete Bewegungskenngröße zu erfassen.

6. Verfahren nach einem der vorhergehenden Ansprüche, **dadurch gekennzeichnet, dass** die Sensoreinheit (22) zumindest ein Helligkeitssensorelement (32), insbesondere eine im visuellen Spektrum arbeitende Kamera, aufweist, die dazu vorgesehen ist, zumindest eine als zumindest eine Helligkeitsänderung ausgebildete Bewegungskenngröße zu erfassen.

7. Verfahren nach einem der vorhergehenden Ansprüche, **dadurch gekennzeichnet, dass** die Sensoreinheit (22) zumindest ein Positionssensorelement (36, 40) und/oder ein Bewegungssensorelement (44, 48, 52), insbesondere einen GPS-Sensor (38), ein Geschwindigkeitssensorelement (46), ein Inertialsensorelement (50) und/oder ein Drehratensensorelement (54), aufweist, die/das dazu vorgesehen sind/ist, zumindest eine als zumindest eine räumliche Position, eine Geschwindigkeit, eine Drehrate und/oder eine Beschleunigung der Kamera (10) ausgebildete Bewegungskenngröße zu erfassen.

8. Kamera, insbesondere handgehaltene Wärmebildkamera (12), mit zumindest einer Bilderfassungseinheit (14), die dazu vorgesehen ist, zumindest ein Bild, insbesondere ein Wärmebild, einer Umgebung zu erfassen, mit zumindest einer Sensoreinheit (22), die dazu vorgesehen ist, zumindest eine Bewegungskenngröße zu erfassen, und mit zumindest einer Recheneinheit (56), die dazu vorgesehen ist, die zumindest eine Bewegungskenngröße zu einer Rauschoptimierung, insbesondere gemäß einem Verfahren nach einem der vorhergehenden Ansprüche, zu verarbeiten, **dadurch gekennzeichnet, dass** mittels der Recheneinheit (56) zumindest in Abhängigkeit von einer Intensität, insbesondere einer Änderungsrate, der Bewegungskenngröße zumindest eine Anzahl zu mittelnder mittels der Kamera (10) erfasster Bilder bestimmt wird.

9. Kamera nach Anspruch 8, **dadurch gekennzeichnet, dass** die zumindest eine Sensoreinheit (22) zumindest ein Inertialsensorelement (50) aufweist, das dazu vorgesehen ist, eine als Beschleunigung und/oder als Drehrate ausgebildete Bewegungskenngröße zu erfassen.

10. Kamera nach Anspruch 8 oder 9, **dadurch gekennzeichnet, dass** die zumindest eine Sensoreinheit (22) zumindest ein Magnetfeldsensorelement (42) aufweist, das dazu vorgesehen ist, eine als eine räumliche Lageänderung relativ zu einem Magnetfeld, insbesondere einem Erdmagnetfeld, ausgebildete Bewegungskenngröße zu erfassen.

## Claims

1. Method for noise optimization of a camera (10), in particular of a handheld thermal imaging camera (12), wherein in at least one method step (62) images are captured using the camera (10), wherein in at least one method step (64) at least one movement characteristic is captured using at least one sensor unit (22) of the camera (10), and wherein in at least one method step (68) averaging of image data of captured images is performed using a computational unit (56) of the camera (10), **characterized in that** in at least one method step (66) at least one number of images to be averaged is determined using the computational unit (56) of the camera (10) at least in dependence on an intensity, in particular a rate of change, of the captured movement characteristic.

2. Method according to Claim 1, **characterized in that** in at least one method step (70) the number of images to be averaged is changed, in particular automatically, in the case of a change in the intensity of the captured movement characteristic.

3. Method according to one of the preceding claims, **characterized in that** in at least one method step (72) at least one image repetition rate, in particular of a display unit (18) and/or the sensor unit (22), of the camera (10) is determined in dependence on the movement characteristic.

4. Method according to one of the preceding claims, **characterized in that** the sensor unit (22) has at least one light sensor element (24), in particular a camera (26) operating in the visual and/or infrared light spectrum, which is provided to capture a movement characteristic which takes the form of an optical difference, in particular a pixel shift, between at least two images captured using the camera (10).

5. Method according to one of the preceding claims, **characterized in that** the sensor unit (22) has at least one temperature sensor element (28), in particular a thermopile (30), which is provided to capture a movement characteristic which takes the form of at least one temperature change.

6. Method according to one of the preceding claims, **characterized in that** the sensor unit (22) has at least one brightness sensor element (32), in particular a camera operating in the visual spectrum, which is provided to capture at least one movement characteristic which takes the form of at least one brightness change.

7. Method according to one of the preceding claims, **characterized in that** the sensor unit (22) has at least one position sensor element (36, 40) and/or a movement sensor element (44, 48, 52), in particular a GPS sensor (38), a speed sensor element (46), an inertial sensor element (50) and/or a rotational speed sensor element (54), which is/are provided to capture at least one movement characteristic which takes the form of at least one spatial position, a speed, a rotational speed and/or an acceleration of the camera (10).

8. Camera, in particular handheld thermal imaging camera (12), having at least one image capturing unit (14), which is provided to capture at least one image, in particular a thermal image, of an environment, having at least one sensor unit (22), which is provided to capture at least one movement characteristic, and having at least one computational unit (56), which is provided to process the at least one movement characteristic for noise optimization, in particular in accordance with a method according to one of the preceding claims, **characterized in that** at least one number of images to be averaged, captured by the camera (10), is determined using the computational unit (56) at least in dependence on an intensity, in particular a rate of change, of the movement characteristic.

9. Camera according to Claim 8, **characterized in that** the at least one sensor unit (22) has at least one inertial sensor element (50), which is provided to capture a movement characteristic which takes the form of an acceleration and/or a rotational speed.

10. Camera according to Claim 8 or 9, **characterized in that** the at least one sensor unit (22) has at least one magnetic field sensor element (42), which is provided to capture a movement characteristic which takes the form of a spatial orientation change relative to a magnetic field, in particular Earth's magnetic field.

## Revendications

1. Procédé pour une optimisation du bruit d'une caméra (10), notamment d'une caméra à infrarouge (12) tenue en main, des images étant acquises au moyen de la caméra (10) dans au moins une étape du procédé (62), au moins une grandeur caractéristique de mouvement étant acquise dans au moins une étape du procédé (64) au moyen d'au moins une unité de détection (22) de la caméra (10) et un calcul de la moyenne de données d'image des images acquises étant effectué dans au moins une étape du procédé (68) au moyen d'une unité de calcul (56) de la caméra (10), **caractérisé en ce que** dans au moins une étape du procédé (66), au moins un nombre d'images dont il faut calculer la moyenne est déterminé au moyen de l'unité de calcul (56) de la caméra (10) au moins en fonction d'une intensité, notamment d'un taux de modification, de la grandeur caractéristique de mouvement acquise.

2. Procédé selon la revendication 1, **caractérisé en ce que** dans au moins une étape du procédé (70), le nombre d'images dont il faut calculer la moyenne dans le cas d'une modification de l'intensité de la grandeur caractéristique de mouvement acquise est modifié, notamment automatiquement.

3. Procédé selon l'une des revendications précédentes, **caractérisé en ce que** dans au moins une étape du procédé (72), au moins un taux de répétition des images, notamment d'une unité d'affichage (18) et/ou de l'unité de détection (22), de la caméra (10) est déterminé en fonction de la grandeur caractéristique de mouvement.

4. Procédé selon l'une des revendications précédentes, **caractérisé en ce que** l'unité de détection (22) possède au moins un élément émetteur de lumière (24), notamment une caméra (26) qui fonctionne dans le spectre lumineux visible et/ou infrarouge, lequel est conçu pour acquérir une grandeur caractéristique de mouvement se présentant sous la forme d'une différence optique, notamment d'un décalage de pixels, entre au moins deux images acquises au moyen de la caméra (10).

5. Procédé selon l'une des revendications précédentes, **caractérisé en ce que** l'unité de détection (22) possède au moins un élément capteur de température (28), notamment une thermopile (30), qui est conçu pour acquérir une grandeur caractéristique de mouvement se présentant sous la forme d'au moins une variation de température.

6. Procédé selon l'une des revendications précédentes, **caractérisé en ce que** l'unité de détection (22) possède au moins un élément capteur de luminosité (32), notamment une caméra qui fonctionne dans le spectre visuel, qui est conçue pour acquérir au moins une grandeur caractéristique de mouvement se présentant sous la forme d'au moins une variation de luminosité.

7. Procédé selon l'une des revendications précédentes, **caractérisé en ce que** l'unité de détection (22) possède au moins un élément capteur de position (36, 40) et/ou un élément capteur de mouvement (44, 48, 52), notamment un capteur GPS (38), un élément capteur de vitesse (46), un élément capteur inertiel (50) et/ou un élément capteur de vitesse de rotation (54), qui est/sont conçu(s) pour acquérir au moins une grandeur caractéristique de mouvement se présentant sous la forme d'au moins une position dans l'espace, une vitesse, une vitesse de rotation et/ou une accélération de la caméra (10).

8. Caméra, notamment une caméra à infrarouge (12) tenue en main, comprenant au moins une unité d'acquisition d'images (14) qui est conçue pour acquérir au moins une image, notamment une image thermique, d'un environnement, comprenant au moins une unité de détection (22) qui est conçue pour acquérir au moins une grandeur caractéristique de mouvement, et comprenant au moins une unité de calcul (56) qui est conçue pour traiter l'au moins une grandeur caractéristique de mouvement en vue d'une optimisation du bruit, notamment conformément à un procédé selon l'une des revendications précédentes, **caractérisée en ce qu'**au moins un nombre d'images acquises au moyen de la caméra (10) dont il faut calculer la moyenne est déterminé au moyen de l'unité de calcul (56) au moins en fonction d'une intensité, notamment d'un taux de modification, de la grandeur caractéristique de mouvement.

9. Caméra selon la revendication 8, **caractérisée en ce que** l'au moins une unité de détection (22) possède au moins un élément capteur inertiel (50) qui est conçu pour acquérir une grandeur caractéristique de mouvement se présentant sous la forme d'une accélération et/ou d'une vitesse de rotation.

10. Caméra selon la revendication 8 ou 9, **caractérisée en ce que** l'au moins une unité de détection (22) possède au moins un élément capteur de champ magnétique (42) qui est conçu pour acquérir une grandeur caractéristique de mouvement se présentant sous la forme d'un changement de position dans l'espace par rapport à un champ magnétique, notamment un champ magnétique terrestre.
